# EUROPÄISCHE PATENTSCHRIFT

(11) **EP 2 017 910 B1**
(45) Veröffentlichungstag und Bekanntmachung des Hinweises auf die Patenterteilung: **27.10.2010**
(21) Anmeldenummer: 08158779.2
(22) Anmeldetag: 23.06.2008
(51) Int. Cl.: H01M 4/58

(54) **Aktives Element und Batterie sowie Verfahren zur Herstellung derselben**
Active element and battery and method for production of same
Elément actif et batterie ainsi que leur procédé de fabrication

(30) Priorität: 20.07.2007 DE 102007034020
(43) Veröffentlichungstag der Anmeldung: 21.01.2009
(73) Patentinhaber: Biotronik CRM Patent AG, 6341 Baar (CH)
(72) Erfinder: Drews, Jürgen, 01796, Pirna (DE); Traulsen, Tim, 01796, Pirna (DE); Fehrmann, Gerd, 01796, Pirna (DE); Hucke, Thomas, 01217, Dresden (DE); Staub, Roland, 01819, Berggießhübel (DE)
(74) Vertreter: Lindner-Vogt, Karin L.

(56) Entgegenhaltungen:
- EP-A- 1 098 379
- EP-A- 1 796 187
- EP-A- 1 852 927
- US-A- 4 260 668

## Beschreibung

Die vorliegende Erfindung betrifft ein aktives Element für eine Batterie, dessen Material ein Kupferoxyphosphat und ein die Leitfähigkeit verbesserndes Additiv enthält. Die vorliegende Erfindung betrifft ferner ein Verfahren zur Herstellung eines derartigen aktiven Elements. Außerdem betrifft die Erfindung eine Batterie sowie ein Verfahren zur Herstellung derselben.

Eine Batterie ist ein elektrochemischer Energiespeicher, dessen gespeicherte chemische Energie durch eine elektrochemische Redoxreaktion in elektrische Energie umgewandelt wird. Aufgrund unterschiedlicher Anforderungen an Batterien bspw. bezüglich Spannung, Leistung, Innenwiderstand und Kapazität existieren heute eine Vielzahl verschiedener Batterientypen. Die Eigenschaften der Batterien werden wesentlich von der Zusammensetzung des Materials der aktiven Elemente der Batterien beeinflusst.

Die Bezeichnung "aktives Element" wird nachfolgend allgemein für eine Elektrode der Batterie, d.h. Kathode oder Anode, verwendet.

Aus den unten genannten Druckschriften sind Materialien für positive aktive Elemente von Batterien bekannt, die Kupferoxyphosphat enthalten. Unter der Bezeichnung Kupferoxyphosphat wird im Folgenden die Verbindung

CuₙOₚ(PO₄)₂ mit 3 < n ≤ 6 und p = (n-3)

zusammengefasst, wobei n = 4 bevorzugt ist. Eine Kathode mit Kupferoxyphosphat wird in einer Batterie bevorzugt zusammen mit einer Anode eingesetzt, die aus Lithium besteht. Als Elektrolyt wird häufig eine Lösung verwendet, die kein Wasser enthält, und insbesondere aus einer Lithium-Verbindung in einem nicht-wässrigen Lösemittel oder Lösemittelgemisch besteht.

Aus den Druckschriften DE 10 2006 021 158 A1, DE 10 2006 059 375 A1 und US 4,260,668 ist ein Material für ein positives aktives Element einer Batterie sowie ein Verfahren zur Herstellung dieses aktiven Elements bekannt. Das Material des positiven aktiven Elements besteht aus mehrheitlich Kupferoxyphosphat Cu₄O(PO₄)₂ als Aktivmaterial, kohlenstoffhaltigen Leitfähigkeitsadditiven wie beispielsweise Graphit und fluoridhaltigen Bindemitteln, beispielsweise Polytetrafluorethylen (PTFE). Diese Masse wurde zu einer Anode oder Kathode verdichtet. Das Kupferoxyphosphat wurde zuvor durch Dehydrierung eines Hydroxyphosphats bei verschiedenen Temperaturen (590°C, 600°C, 620°C und 900°C) hergestellt.

Die Druckschrift US 4,448,864 offenbart eine Lithium-Mangandioxid-Batterie, dessen positive Elektrode neben Mangandioxid auch Kupferoxyphosphat und Graphit sowie PTFE als Binder enthält. Der Anteil des Kupferoxyphosphat an der Zusammensetzung dieser Elektrode beträgt in einem in dieser Druckschrift geschilderten Beispiel 10 Gew.%. Durch den Anteil des Kupferoxyphosphat wird bei der Entladung der Batterie ein zweites Plateau etwa bei einer Spannung 2,2 V bis 2,3 V erreicht, wobei die Ausdehnung des Plateaus durch die Menge des Kupferoxyphosphats in dem Material der positiven Elektrode bestimmt wird.

Für die Anwendung in medizinischen Implantaten mit elektronischen Komponenten für einen Menschen oder ein Tier, wie Herzschrittmacher, die mit einer drahtlosen, vorzugsweise bi-direktionalen, Datenübertragung versehen werden sollen, werden Batterien benötigt, die einerseits eine hohe Kapazität aufweisen und andererseits die Entnahme hoher Entladeströme im mA-Bereich ermöglichen. Eine hohe Kapazität der Batterie verlängert die Einsatzzeit des medizinischen Implantats und verringert somit die Anzahl der chirurgischen Eingriffe, da das Auswechseln der Batterie bzw. das Einsetzen eines neuen Implantats mit einer vollen Batterie in der Regel mit einem chirurgischen Eingriff verbunden ist. Ein hoher Entladestrom ist für die Bereitstellung hoher Ströme für die Datenübertragung notwendig.

Die in den vorgenannten Druckschriften beschriebenen Kathodenmaterialien für Lithium-Primärbatterien haben den Nachteil, dass die mit ihnen ausgerüsteten Batterien keine höhere Entladekapazität aufweisen als die derzeit verwendeten Lithium-Iod-Batterien. Lithium-Iod-Batterien können hingegen keine Ströme im mA-Bereich entnommen werden.

Die Aufgabe der vorliegenden Erfindung besteht demnach darin, ein aktives Element zu schaffen, das eine hohe Kapazität aufweist und bei der Verwendung in einer Batterie die Entnahme von Strompulsen im mA-Bereich erlaubt. Die Aufgabe der Erfindung besteht weiter darin, eine entsprechende Batterie zu schaffen sowie ein kostengünstiges und einfaches Verfahren zur Herstellung eines derartigen aktiven Elements bzw. einer derartigen Batterie anzugeben.

Die obige Aufgabe wird durch ein bindemittelfreies aktives Element gelöst, bei dem der Anteil des die Leitfähigkeit verbessernden Additivs in dem Material zwischen 3 Gew.% und 7 Gew.%, vorzugsweise zwischen 3 Gew.% und 5 Gew.% beträgt, und sich der Anteil des Kupferoxyphosphats in dem Material zu 100 Gew.% des Materials addiert.

Es hat sich überraschend gezeigt, dass bei der erfindungsgemäßen Zusammensetzung des Materials des aktiven Elements der Anteil des Bindemittels so stark verringert werden kann, ohne dass das Element die erforderliche mechanische Festigkeit verliert, dass das Bindemittel in der Regel ganz entfallen kann. Hierdurch lässt sich der Anteil an Aktivmaterial in der Elektrode signifikant steigern, da das sonst durch ein Bindemittel beanspruchte Volumen des aktiven Elements vollständig durch entladbares Aktivmaterial (Kupferoxyphosphat) ersetzt werden kann.

Dies führt zum großen Vorteil eines derartigen aktiven Elements, nämlich dass eine Batterie mit einem derartigen aktiven Element bei gleichem Volumen eine höhere Entladekapazität als eine herkömmliche Lithium-lod-Batterie aufweist. Außerdem besitzt eine Batterie mit einem derartigen aktiven Element als Kathode einen geringen Innenwiderstand, so dass sich Ströme im mA-Bereich mit Pulslängen von mehr als einer Sekunde entnehmen lassen. Hierdurch kann in mit derartigen Batterien ausgerüsteten medizinischen Implantaten eine drahtlose Datenübertragung vorgesehen werden, da die entsprechenden elektronischen Komponenten mit ausreichend hohen Strömen versorgt werden können. Die Strombelastbarkeit ist hierbei so hoch, dass diese Implantate für bi-direktionale Datentelemetrie geeignet sind.

Den gemäß dem Stand der Technik verwendeten Lithium-tod-Batterien können keine Pulsströme mit vergleichbarer Stromstärke und Pulslänge entnommen werden, da der Innenwiderstand dieser Batterien erheblich größer ist.

Ein weiterer Vorteil des erfindungsgemäßen aktiven Elements besteht darin, dass der Innenwiderstand von Batterien mit einem derartigen aktiven Element mit der Zeit absinkt bzw. über einen weiten Zeitraum der Entladung nahezu konstant bleibt, während der Innenwiderstand der herkömmlichen Lithium-Iod-Batterien bei der Entladung kontinuierlich ansteigt.

Die vorliegende Erfindung beruht weiter auf der Erkenntnis, dass der Anteil des die Leitfähigkeit verbessernden Additivs, z.B. Graphit, gegenüber dem Stand der Technik deutlich abgesenkt werden kann. Hierdurch lässt sich der Anteil der aktiven Komponente, Kupferoxyphosphat, signifikant erhöhen. Eine Verringerung des Graphitanteils wird dadurch ermöglicht, da die elektrische Leitfähigkeit der Elektrode durch das im Verlauf der Entladung gebildete elementare Kupfer stark erhöht wird. Dieser Vorgang kann folgendermaßen beschrieben werden:

Cu₄O(PO₄)₂ + 8 Li → 4 Cu + Li₂O + 2 Li₃PO₄.

Das bei dieser Reaktion gebildete Kupfer bewirkt eine starke Absenkung des Innenwiderstands der Batterie, vor allem zu Beginn der Entladung. Beispielsweise halbiert sich der Innenwiderstand der Batterie bei einem Graphitanteil von nur 5% in der Kathode bei einer Kapazitätsentnahme von nur 3% aus der Batterie. Hierbei ist die Kapazitätsentnahme, die für die Senkung des Innenwiderstands notwendig ist, gering im Vergleich zu dem Kapazitätsgewinn, der durch den erhöhten Anteil an der aktiven Komponente der Elektrode erzielt wird. Dieser Effekt ist bei einem höheren Anteil an leitfähigen Additiven nach dem Stand der Technik zwar ebenfalls vorhanden, tritt dort aber deutlich weniger in Erscheinung, da er weniger ausgeprägt ist.

Weiterhin von Vorteil ist, wenn die Partikelgröße der Kupferoxyphosphat-Partikel zwischen 1 µm und 100 µm liegt. Die Partikelgröße kann beispielsweise mittels Laserbeugungsspektrometrie bestimmt werden.

In einem bevorzugten Ausführungsbeispiel enthält das die Leitfähigkeit verbessernde Additiv Ruß und/oder Graphit, vorzugsweise expandiertes Graphit. Hierbei wird unter expandiertem Graphit (auch flexibles Graphit genannt) ein Graphit verstanden, der aus Naturgraphit hergestellt wird. Aus dem Naturgraphit werden zunächst Graphiteinlagerungsverbindungen produziert, die anschließend wieder thermisch zersetzt (expandiert) werden.

Dabei entstehen lockere Graphitansammlungen aus reinem Graphit. Alternativ oder zusätzlich können als die Leitfähigkeit verbessernde Additive plättchen-, kugel- oder kartoffelförmiges Graphit und/oder leitfähige Fasern wie vapor grown fibers verwendet werden.

Die obige Aufgabe wird außerdem durch ein Verfahren zur Herstellung eines bindemittelfreien aktiven Elements für eine Batterie mit den folgenden Schritten gelöst:
a) Herstellung einer homogenen Mischung zumindest aus pulverförmigem Kupferoxyphosphat und einem die Leitfähigkeit verbessernden Additiv, wobei der Anteil des die Leitfähigkeit verbessernden Additivs an der Mischung zwischen 3 Gew.% und 7 Gew.%, vorzugsweise zwischen 3 Gew.% und 5 Gew.% beträgt, und sich der Anteil des Kupferoxyphosphats in dem Material zu 100 Gew.% des Materials addiert und
b) Verfestigung der nach Schritt a) hergestellten Mischung mittels uniaxialem oder isostatischem Pressen zu dem aktiven Element der gewünschten Form.

Das erfindungsgemäße Verfahren zur Herstellung eines aktiven Elements für eine Batterie zeichnet sich dadurch aus, dass es kostengünstig und einfach die Herstellung des oben beschriebenen aktiven Elements ermöglicht. Insbesondere können aktive Elemente mit einer ausreichenden Festigkeit für die Verwendung in Batterien hergestellt werden. Bevorzugt wird in Schritt b) ein Stempel-Matrize-Verfahren angewendet.

Gegebenenfalls kann sich an Schritt b) ein Trocknungsschritt anschließen. Alternativ oder zusätzlich zu dem Trocknungsschritt kann in einem weiteren Schritt die gepresste Form zu einer gewünschten Form, z.B. zu einem aktiven Element mit einer gewünschten Dicke (z.B. bei dünnen Elektroden), zugeschnitten werden.

In einem besonders bevorzugten Ausführungsbeispiel wird die Verfestigung in Schritt b) mit einem Druck durchgeführt, der zwischen 30 kN/cm² und 40 kN/cm² liegt. Mit einem Pressdruck in dem genannten Bereich können aktive Elemente mit besonders guten Festigkeitswerten erzielt werden.

Analog zu dem erfindungsgemäßen aktiven Element ist es besonders vorteilhaft, wenn der Anteil des die Leitfähigkeit verbessernden Additivs an der nach Schritt a) hergestellten

Mischung zwischen 3 Gew.% und 5 Gew.% und/oder die Partikelgröße des pulverförmigen Kupferoxydphosphats zwischen 1 µm und 100 µm liegt. Ebenso bevorzugt ist die Verwendung eines die Leitfähigkeit verbessernden Additivs, das Ruß und/oder Graphit, vorzugsweise expandiertes Graphit, enthält.

Die obige Aufgabe wird ferner gelöst durch ein bindemittelfreies aktives Element für eine Batterie, das nach dem oben angegebenen Verfahren hergestellt ist. Dieses aktive Element ermöglicht die Herstellung einer Batterie mit den oben angegebenen Vorteilen.

Außerdem wird die obige Aufgabe durch ein Verfahren zur Herstellung einer Batterie gelöst, bei dem zuerst ein erstes bindemittelfreies aktives Element nach dem obigen Verfahren hergestellt wird und anschließend die Batterie zumindest aus einem Gehäuse, einem Elektrolyten und einem zweiten bindemittelfreien aktiven Element zusammengesetzt wird. Das erste aktive Element bildet hierbei vorzugsweise die Kathode und das zweite aktive Element die Anode.

Die Aufgabe wird ferner gelöst durch eine Batterie, die ein oben beschriebenes bindemittelfreies aktives Element aufweist oder nach dem obigen Verfahren hergestellt ist.

Das erfindungsgemäße Verfahren zur Herstellung einer Batterie ist einfach und kostengünstig. Die resultierende Batterie weist eine hohe Entladekapazität und einen geringen, mit der Zeit sinkenden Innenwiderstand auf und ermöglicht die Entnahme von Strompulsen im mA-Bereich. Sie ist daher insbesondere für die Anwendung in medizinischen Implantaten geeignet, die zur drahtlosen Datenübertragung ausgebildet sind.

Weitere Ziele, Merkmale, Vorteile und Anwendungsmöglichkeiten der Erfindung ergeben sich aus der nachfolgenden Beschreibung eines Ausführungsbeispiels für ein aktives Element, wobei die Eigenschaften der erfindungsgemäßen Batterien mit einem erfindungsgemäßen aktiven Element anhand von Diagrammen veranschaulicht sind. Alle beschriebenen und/oder bildlich dargestellten Merkmale bilden für sich oder in beliebiger Kombination den Gegenstand der Erfindung, unabhängig von ihrer Zusammenfassung in einzelnen Ansprüchen oder deren Rückbeziehung.

Es zeigen:

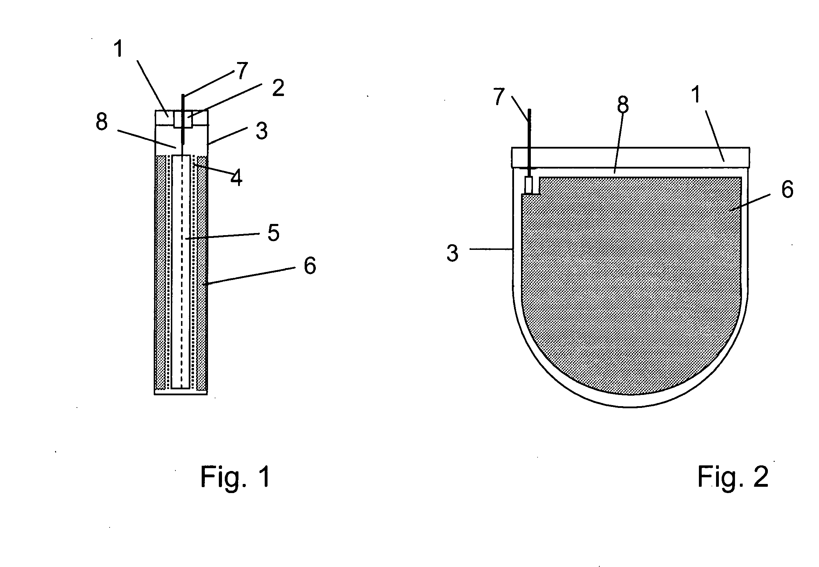

- Fig. 1: eine erfindungsgemäße Batterie mit einem erfindungsgemäßen aktiven Element als Kathode in einem Querschnitt,
- Fig. 2: die erfindungsgemäße Batterie gemäß Figur 1 in einem weiteren Querschnitt,

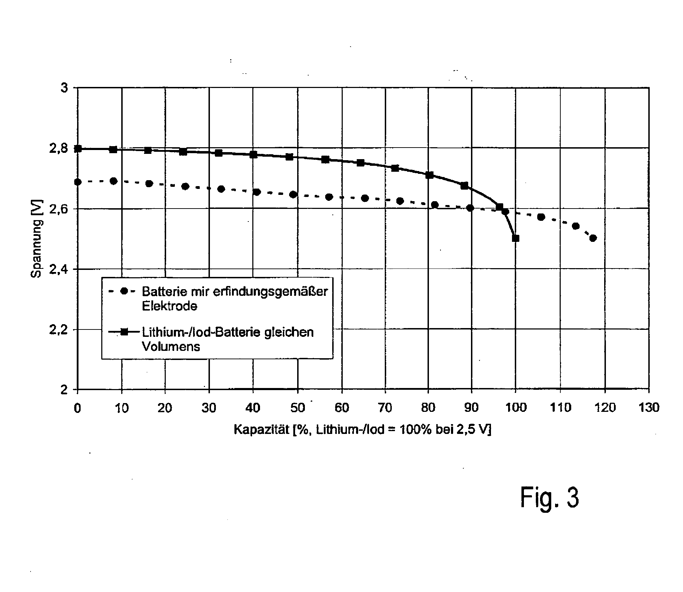

- Fig. 3: einen Vergleich der Entladekapazität (volumenbezogener Kapazität) in % einer Batterie mit einem nach dem Ausführungsbeispiel hergestellten aktiven Element als Kathode (gestrichelte Linie) mit einer Lithium-Iod-Batterie gleichen Volumens (durchgezogene Linie) bei unterschiedlichen Entladespannungen in V, wobei die Kapazität einer Lithium-Iod-Batterie bei 2,5 V zu 100% festgelegt wurde und die Entladung an einem Konstantwiderstand von 100 kΩ erfolgte,

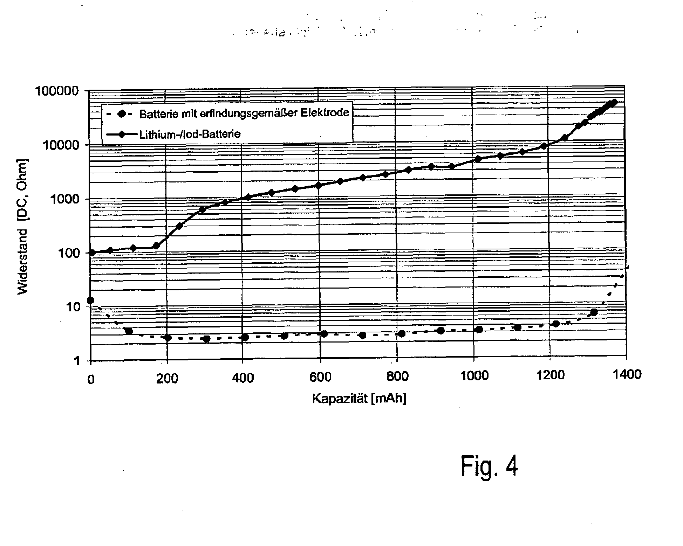

- Fig. 4: einen Vergleich des Batteriewiderstands (Gleichstromwiderstand in Ω) einer Bat- terie mit einem nach dem Ausführungsbeispiel hergestellten aktiven Element als Kathode (gestrichelte Linie) mit einer Lithium-Iod-Batterie gleichen Volumens (durchgezogene Linie) in Abhängigkeit von der Kapazität in mAh in einer loga- rithmischen Auftragung und

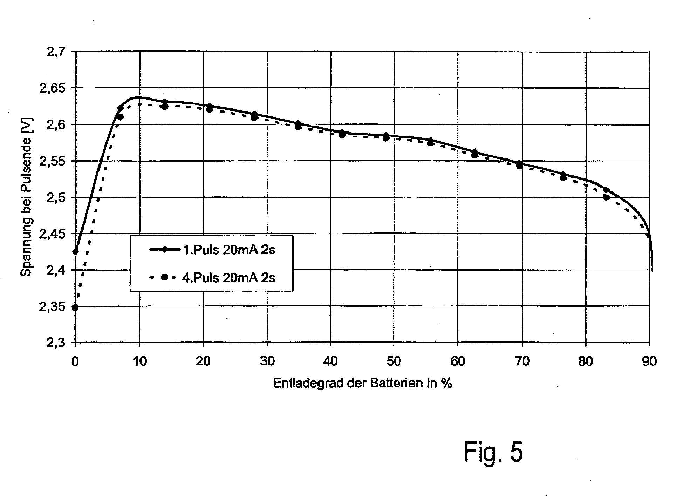

- Fig. 5: die Pulsbelastbarkeit einer Batterie mit einem nach dem Ausführungsbeispiel hergestellten aktiven Element als Kathode dargestellt durch eine Auftragung der Spannung bei Pulsende in V über dem Entladegrad der Batterie in %, wobei die Spannungswerte nach dem ersten Puls mit einer durchgezogenen Linie und die Spannungswerte nach dem vierten Puls mit einer gestrichelten Linie gekenn- zeichnet werden. Die Pulsentladung erfolgte über 4 Pulse mit einer Stromstärke von jeweils 20 mA über eine Pulsdauer von jeweils 2 Sekunden, wobei zwischen den Einzelpulsen eine Pause von 15 Sekunden eingehalten wurde.

Zur Herstellung des erfindungsgemäßen aktiven Elements nach dem Ausführungsbeispiel wird zunächst Kupferoxyphosphat dargestellt. Hierfür werden 125 ml 85%ige Phosphorsäure mit 500 ml destilliertem Wasser verdünnt. Dieser Lösung wird 270 g Kupfer(II)oxid zugesetzt und diese anschließend vier Stunden unter Rückfluss erhitzt. Nach dem Abkühlen wird das gebildete Kupfer(II)hydroxyphosphat abfiltriert, gründlich mit destilliertem Wasser gewaschen und anschließend bei 100°C getrocknet. Danach wird das Kupfer(II)hydroxyphosphat bei 900°C für eine Stunde geglüht, wobei durch Wasserabspaltung das gewünschte Kupfer(II)oxyphosphat entsteht.

Von dem so gewonnenen Kupferoxyphosphat werden anschließend 5,22 g Kupferoxyphosphat 0,275 g expandiertem Graphit homogen vermischt. Diese Pulvermischung wird mit einem Druck von 35 kN/cm2 mittels uniaxialem Pressen unter Anwendung eines Stempel-Matrize-Verfahrens zu einer mechanisch stabilen Elektrode mit einer Dicke von 3,2 mm, einer aktiven Oberfläche von 10,5 cm² und einem Volumen von 1,68 cm³ verdichtet.

Das so hergestellte erfindungsgemäße aktive Element wird als Kathode mit einer aus Lithium bestehenden Anode sowie einem Gehäuse und einem Elektrolyten zu einer erfindungsgemäßen Batterie zusammengesetzt. Als Elektrolyt dient eine 1-molare-Lösung von Lithiumperchlorat in einer Mischung von 1,2-Dimethoxyethan, Ethylencarbonat und Propylencarbonat (4:4:2).

Die in Figur 1 gezeigte erfindungsgemäße Batterie weist eine als Ableitungsgitter gestaltete Kathode 5 auf, die als erfindungsgemäßes erstes aktives Element wie oben erläutert hergestellt wurde. Die äußere Form der Kathode 5 ist plattenförmig gestaltet. Auf beiden Seiten der größten Flächen der Kathode 5 ist je ein Separator 4 angeordnet. Gegenüber der Außenseite der Separatoren 4 ist je eine Anode 6 als zweites aktives Element vorgesehen, die ebenfalls plattenförmig gestaltet sind. Zwischen Kathode 5 und Anoden 6 befindet sich das Elektrolyt 8. Die Kathode 5 und die Anoden 6 sind mit Anschlüssen 7 verbunden, die über eine Glas-Metall-Durchführung 2 durch den Deckel 1 der Batterie nach außen geführt werden. Der Deckel 1 schließt das Gehäuse 3, in dem Kathode 5, Separator 4, Anode 6 und das Elektrolyt angeordnet sind, nach oben dichtend ab.

Figur 2 zeigt die in Figur 1 dargestellte Batterie in einem Querschnitt, der durch eine Anode 6 senkrecht zu dem in Figur 1 dargestellten Querschnitt verläuft.

In dem in Figur 3 dargestellten Vergleich der erfindungsgemäßen Batterie im Hinblick auf die Entladekapazität mit einer Lithium-Iod-Batterie gleichen Volumens erfolgte die Entladung über einen Zeitraum von vier Monaten. In Figur 3 ist zu erkennen, dass die mit einer gestrichelten Linie dargestellten Batterie mit dem erfindungsgemäßen aktiven Element eine deutlich höhere Entladekapazität als die herkömmliche Lithium-Iod-Batterie aufweist.

Figur 4 zeigt den Vergleich der für den Vergleich in Figur 3 verwendeten erfindungsgemäßen Batterie mit der erfindungsgemäßen Elektrode mit einer Lithium-Iod-Batterie gleichen Volumens im Hinblick auf den Innenwiderstand. Dem Diagramm ist entnehmbar, dass die erfindungsgemäße Batterie mit einem erfindungsgemäßen aktiven Element einen deutlich geringeren Innenwiderstand besitzt als eine herkömmliche Lithium-Iod-Batterie gleichen Volumens.

In Figur 5 ist die Pulsbelastbarkeit der für die in den Figuren 3 und 4 gezeigten Vergleiche verwendeten erfindungsgemäßen Batterie dargestellt. Es ist zu erkennen, dass sich die bei dem jeweiligen Entladegrad aufgetragenen Spannungen bei Pulsende des vierten Pulses (gestrichelte Linie) gegenüber den Spannungen des ersten Pulses (durchgezogene Linie) nicht signifikant unterscheiden. Die Pulsbelastbarkeit der erfindungsgemäßen Batterie kann daher bei den verwendeten Stromstärken im mA-Bereich als hoch eingeschätzt werden.

### Bezugszeichenliste

- 1: Deckel
- 2: Glas-Metall-Durchführung
- 3: Gehäuse
- 4: Separator
- 5: Ableitungsgitter der Kathode
- 6: Anode
- 7: Anschluss
- 8: Elektrolyt

## Patentansprüche

1. Bindemittelfreies aktives Element für eine Batterie, dessen Material Kupferoxyphosphat und ein die Leitfähigkeit verbesserndes Additiv enthält, **dadurch gekennzeichnet, dass** der Anteil des die Leitfähigkeit verbessernden Additivs in dem Material höchstens zwischen 3 Gew.% und 7 Gew.%, vorzugsweise zwischen 3 Gew.% und 5 Gew.% beträgt, und sich der Anteil des Kupferoxyphosphats in dem Material zu 100 Gew.% des Materials addiert.

2. Aktives Element nach Anspruch 1, **dadurch gekennzeichnet, dass** die Partikelgröße der Kupferoxyphosphat-Partikel zwischen 1 µm und 100 µm liegt.

3. Aktives Element nach einem der vorhergehenden Ansprüche, **dadurch gekennzeichnet, dass** das die Leitfähigkeit verbessernde Additiv Ruß und/oder Graphit, vorzugsweise expandiertes Graphit, enthält.

4. Verfahren zur Herstellung eines bindemittelfreien aktiven Elements für eine Batterie mit folgenden Schritten:
a) Herstellung einer homogenen Mischung zumindest aus pulverförmigem Kupferoxyphosphat und einem die Leitfähigkeit verbessernden Additiv, wobei der Anteil des die Leitfähigkeit verbessernden Additivs in dem Material höchstens zwischen 3 Gew.% und 7 Gew.%, vorzugsweise zwischen 3 Gew.% und 5 Gew.% beträgt, und sich der Anteil des Kupferoxyphosphats in dem Material zu 100 Gew.% des Materials addiert und
b) Verfestigung der nach dem Schritt a) hergestellten Mischung mittels uniaxialem oder isostatischem Pressen zu dem aktiven Element der gewünschten Form.

5. Verfahren nach Anspruch 4, **dadurch gekennzeichnet, dass** die Verfestigung in Schritt b) mit einem Druck durchgeführt wird, der zwischen 30 kN/cm² und 40 kN/cm² liegt.

6. Verfahren nach Anspruch 4 oder 5, **dadurch gekennzeichnet, dass** die Partikelgröße der Kupferoxyphosphat-Partikel des pulverförmigen Kupferoxyphosphats zwischen 1 µm und 100 µm beträgt.

7. Verfahren nach einem der Ansprüche 4 bis 6, **dadurch gekennzeichnet, dass** das die Leitfähigkeit verbessernde Additiv Ruß und/oder Graphit, vorzugsweise expandiertes Graphit, enthält.

8. Verfahren zur Herstellung einer Batterie, **dadurch gekennzeichnet, dass** zuerst ein erstes bindemittelfreies aktives Element (5) nach dem Verfahren nach einem der Ansprüche 4 bis 7 hergestellt wird und anschließend die Batterie zumindest aus einem Gehäuse (3), einem Elektrolyten (8) und einem zweiten bindemittelfreien aktiven Element (6) zusammengesetzt wird.

9. Batterie, insbesondere zur Verwendung in einem medizinischen Implantat, mit einem bindemittelfreien aktiven Element (5) nach einem der Ansprüche 1 bis 3.

## Claims

1. A binding agent-free active element for a battery, the material of which comprises copper oxyphosphate and an additive improving the conductivity, **characterized in that** the proportion of the additive improving the conductivity in the material is no more than 3% by weight to 7% by weight, preferably between 3% by weight and 5% by weight, and that the proportion of the copper oxyphosphate in the material adds up to 100% by weight of the material.

2. The active element according to claim 1, **characterized in that** the particle size of the copper oxyphosphate particles ranges between 1 µm and 100 µm.

3. An active element according to any one of the preceding claims, **characterized in that** the additive improving the conductivity comprises carbon black and/or graphite, preferably expanded graphite.

4. A method for producing a binding agent-free active element for a battery, comprising the following steps:
a)producing a homogeneous mixture from at least powdery copper oxyphosphate and an additive improving the conductivity, wherein the proportion of the additive improving the conductivity in the mixture is no more than 3% by weight to 7% by weight, preferably between 3% by weight and 5% by weight, and the proportion of the copper oxyphosphate in the material adds up to 100% by weight, and
b) compacting the mixture produced according to step a) into the active element having the desired shape by way of uniaxial or isostatic pressing.

5. The method according to claim 4, **characterized in that** the compaction in step b) is carried out at a pressure ranging between 30 kN/cm² and 40 kN/cm².

6. The method according to claim 4 or 5, **characterized in that** the particle size of the copper oxyphosphate particles of the powdery copper oxyphosphate ranges between 1 µm and 100 µm.

7. A method according to any one of claims 4 to 6, **characterized in that** the additive improving the conductivity comprises carbon black and/or graphite, preferably expanded graphite.

8. A method for producing a battery, **characterized in that** initially a first binding agent-free active element (5) is produced employing the method according to any one of claims 4 to 7, and thereafter the battery is assembled from at least one housing (3), an electrolyte (8), and a second binding-agent free active element (6).

9. A battery, particularly for use in a medical implant, comprising a binding agent-free active element (5) according to any one of claims 1 to 3.

## Revendications

1. Elément actif exempt de liant pour une batterie, dont le matériau comprend de l'oxyphosphate de cuivre et un additif améliorant la conductivité, **caractérisé par le fait que** la proportion de l'additif améliorant la conductivité dans le matériau est au maximum entre 3% en poids et 7% en poids, de préférence entre 3% en poids et 5% en poids, et que la proportion d'oxyphosphate de cuivre dans le matériau est le complément à 100% en poids du matériau.

2. Elément actif selon la revendication 1, **caractérisé par le fait que** la dimension de particule des particules d'oxyphosphate de cuivre se situe dans la plage entre 1 µm et 100 µm.

3. Elément actif selon l'une quelconque des revendications précédentes, **caractérisé par le fait que** l'additif améliorant la conductivité comprend du noir de carbone et/ou du graphite, de préférence du graphite expansé.

4. Procédé de fabrication d'un élément actif exempt de liant pour une batterie, comprenant les étapes suivantes:
a) production d'un mélange homogène d'au moins de l'oxyphosphate de cuivre pulvérulent et d'un additif améliorant la conductivité, la proportion de l'additif améliorant la conductivité dans le mélange étant au maximum entre 3% en poids et 7% en poids, de préférence entre 3% en poids et 5% en poids, et la proportion d'oxyphosphate de cuivre dans le matériau étant le complément à 100% en poids; et
b) compactage du mélange obtenu à l'étape a) en l'élément actif ayant la forme désirée au moyen d'une compression uniaxiale ou isostatique.

5. Procédé selon la revendication 4, **caractérisé par le fait que** le compactage à l'étape b) est effectué à une pression se situant dans une plage entre 30 kN/cm² et 40 kN/cm²_{.}

6. Procédé selon l'une des revendications 4 ou 5, **caractérisé par le fait que** la dimension de particule des particules d'oxyphosphate de cuivre de l'oxyphosphate de cuivre pulvérulent se situe dans une plage entre 1 µm et 100 µm.

7. Procédé selon l'une quelconque des revendications 4 à 6, **caractérisé par le fait que** l'additif améliorant la conductivité comprend du noir de carbone et/ou du graphite, de préférence du graphite expansé.

8. Procédé de fabrication d'une batterie, **caractérisé par le fait qu**'initialement, un premier élément actif exempt de liant (5) est obtenu à l'aide du procédé tel que défini à l'une quelconque des revendications 4 à 7, puis la batterie est assemblée à partir d'au moins un boîtier (3), un électrolyte (8), et un second élément actif exempt de liant (6).

9. Batterie, en particulier pour une utilisation dans un implant médical, comprenant un élément actif exempt de liant (5) tel que défini à l'une quelconque des revendications 1 à 3.
